# EUROPEAN PATENT APPLICATION

(11) **EP 3 767 990 A1**
(43) Date of publication of application: **20.01.2021**
(21) Application number: 18909873.4
(22) Date of filing: 14.03.2018
(51) Int. Cl.: H04W 24/10, H04W 72/04

(54) **USER EQUIPMENT AND WIRELESS COMMUNICATION METHOD**

(71) Applicant: NTT DoCoMo, Inc., Tokyo 100-6150 (JP)
(72) Inventor: TAKEDA, Kazuki, Tokyo 100-6150 (JP); YOSHIOKA, Shohei, Tokyo 100-6150 (JP); NAGATA, Satoshi, Tokyo 100-6150 (JP); WANG, Lihui, Beijing 100190 (CN); LI, Huiling, Beijing 100190 (CN); HOU, Xiaolin, Beijing 100190 (CN)
(74) Representative: Hoffmann Eitle
(86) International application number: PCT/JP2018/010031
(87) International publication number: WO 2019/176025

(57) **Abstract**

A user terminal includes: a receiving section that receives downlink control information for instructing activation or deactivation of a semi-persistent channel state information reporting; and a control section that determines whether or not the downlink control information instructs the deactivation based on a value of at least one field including a frequency domain resource allocation field of the downlink control information.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New Radio Access (NX), Future generation radio access (FX) and LTE Rel. 14, 15 or subsequent releases) are also studied.

In legacy LTE systems (e.g., LTE Rel. 8 to 13), a user terminal (UE: User Equipment) periodically and/or aperiodically transmits Channel State Information (CSI) to a base station. The UE transmits the CSI by using an uplink control channel (PUCCH: Physical Uplink Control Channel) and/or an uplink shared channel (PUSCH: Physical Uplink Shared Channel).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

For a future radio communication system (e.g., NR), a CSI reporting that uses a different configuration from those of legacy LTE systems (e.g., LTE Rel. 13 and prior releases) is studied.

For example, a Semi-Persistent CSI (SP-CSI) reporting where a UE reports CSI by using a semi-permanently (semi-continuously or semi-persistently) indicated resource is studied.

Furthermore, it is studied to dynamically control activation and deactivation of the SP-CSI reporting by using Downlink Control Information (DCI). However, how to activate and deactivate the SP-CSI reporting is not specifically determined. Unless activation and deactivation are appropriately controlled, an operation based on the SP-CSI reporting is not suitably performed, and there is a problem that a throughput lowers.

It is therefore one of objects of the present disclosure to provide a user terminal and a radio communication method that can appropriately control activation and deactivation of an SP-CSI reporting.

### Solution to Problem

A user terminal according to one aspect of the present disclosure includes: a receiving section that receives downlink control information for instructing activation or deactivation of a semi-persistent channel state information reporting; and a control section that determines whether or not the downlink control information instructs the deactivation based on a value of at least one field including a frequency domain resource allocation field of the downlink control information.

### Advantageous Effects of Invention

According to one aspect of the present disclosure, it is possible to appropriately control activation and deactivation of an SP-CSI reporting.

### Brief Description of Drawings

Fig. 1 is a diagram illustrating one example of a DCI format 0_1 including a CRC scrambled by an SP-CSI-RNTI.
Fig. 2 is a diagram illustrating one example of values of specific fields of activation DCI.
Fig. 3 is a diagram illustrating one example of values of specific fields of deactivation DCI.
Fig. 4 is a diagram illustrating one example of a schematic configuration of a radio communication system according to one embodiment.
Fig. 5 is a diagram illustrating one example of an overall configuration of a radio base station according to the one embodiment.
Fig. 6 is a diagram illustrating one example of a function configuration of the radio base station according to the one embodiment.
Fig. 7 is a diagram illustrating one example of an overall configuration of a user terminal according to the one embodiment.
Fig. 8 is a diagram illustrating one example of a function configuration of the user terminal according to the one embodiment.
Fig. 9 is a diagram illustrating one example of hardware configurations of the radio base station and the user terminal according to the one embodiment.

### Description of Embodiments

According to NR, a reference signal for measuring a channel state on downlink is studied. A reference signal for channel state measurement may be a signal that is referred to as a Cell-specific Reference Signal (CRS), a Channel State Information-Reference Signal (CSI-RS), a Synchronization Signal Block (an SSB or an SS/Physical Broadcast Channel (PBCH) block), a Synchronization Signal (SS) or a Demodulation-Reference Signal (DM-RS).

A UE feeds back (reports) a result measured based on the reference signal for channel state measurement as Channel State Information (CSI) at a given timing to a radio base station (that may be referred to as, for example, a Base Station (BS), a Transmission/Reception Point (TRP), an eNodeB (eNB), a gNB (NR NodeB) or a network). The CSI may include a Channel Quality Indicator (CQI), a Precoding Matrix Indicator (PMI), a Rank Indicator (RI), or L1-RSRP (Reference Signal Received Power (RSRP) in a physical layer).

As a CSI feedback method, (1) a Periodic CSI (P-CSI) reporting, (2) an Aperiodic CSI (A-CSI) reporting and (3) a Semi-Permanent (semi-continuous or Semi-Persistent) CSI reporting (SP-CSI) are studied.

Once an SP-CSI reporting resource (that may be referred to as an SP-CSI resource) is indicated, the UE can periodically use a resource based on the indication until, for example, release (or deactivation) of the SP-CSI resource is indicated.

The SP-CSI resource may be a resource configured by a higher layer signaling, may be a resource indicated by an activation signal (that may be referred to as a "trigger signal") of the SP-CSI reporting, or may be a resource indicated by both of the higher layer signaling and the activation signal.

In this regard, the higher layer signaling may be one of, for example, an Radio Resource Control (RRC) signaling, a Medium Access Control (MAC) signaling and broadcast information or a combination of these.

For example, an MAC Control Element (MAC CE) or an MAC Protocol Data Unit (PDU) may be used as the MAC signaling. The broadcast information may be, for example, a Master Information Block (MIB), a System Information Block (SIB) or Remaining Minimum System Information (RMSI).

Information of the SP-CSI resource may include information related to, for example, a report periodicity (ReportPeriodicity) and an offset (ReportSlotOffset), and these report periodicity and offset may be expressed in slot units or subframe units. The information of the SP-CSI resource may include a configuration ID (CSI-ReportConfigId), and parameters such as a type (the SP-CSI or not) and the report periodicity of a CSI reporting method may be specified based on the configuration ID. Information of the SP-CSI resource may be referred to as an SP-CSI resource configuration or an SP-CSI reporting configuration.

When receiving a given activation signal, the UE can periodically perform, for example, CSI measurement that uses a given reference signal (that may be referred to as, for example, an SP-CSI-RS) and/or an SP-CSI reporting that uses an SP-CSI resource. When the UE receives a given deactivation signal or a given timer started by activation expires, the UE stops the SP-CSI measurement and/or reporting.

The SP-CSI reporting may be transmitted by using a Primary Cell (PCell) or a Primary Secondary Cell (a PSCell), a PUCCH Secondary Cell (PUCCH SCell) or other cells (e.g., secondary cell)).

The activation/deactivation signal of the SP-CSI reporting may be notified by using, for example, an MAC signaling (e.g., MAC CE), or may be notified by using a physical layer signaling (e.g., Downlink Control Information (DCI)).

In addition, the SP-CSI reporting may be transmitted by using one or both of a PUCCH and a PUSCH. Which one of the PUCCH and the PUSCH is used to transmit the SP-CSI reporting may be configured from a gNB to the UE by an RRC signaling, may be indicated by an MAC CE, or may be notified by DCI.

A channel for performing the SP-CSI reporting may be decided based on an activation signal of the SP-CSI reporting. For example, the SP-CSI reporting that uses a PUCCH may be activated by an MAC CE. The SP-CSI reporting that uses a PUSCH may be triggered by DCI.

The DCI may be DCI whose Cyclic Redundancy Check (CRC) bits are masked (scrambled) by a Radio Network Temporary Identifier (an RNTI, an SP-CSI-RNTI or an SP-CSI Cell-RNTI (SP-CSI C-RNTI)) for an SP-CSI reporting.

When a plurality of SP-CSI resources are configured to the UE, the activation signal for the SP-CSI reporting may include information indicating one of a plurality of SP-CSI resources. In this case, the UE can determine a resource used for the SP-CSI reporting based on the activation signal of the SP-CSI reporting.

The UE may transmit a feedback in response to reception of a given activation/deactivation signal. The feedback may be an acknowledgement response (ACK: Acknowledgement). When, for example, the given activation/deactivation signal is transmitted by using the MAC CE, the MAC CE is included in the PDSCH and transmitted, and therefore the above feedback may be an HARQ feedback for the PDSCH (e.g., ACK, Negative ACK (NACK) and Discontinuous Transmission (DTX)).

A DCI format 0_0 and a DCI format 0_1 are used to schedule a PUSCH. The DCI format 0_1 can control various functions (e.g., the number of MIMO layers or HARQ-ACK feedback in a codebook unit) configured by a UE-specific higher layer signaling compared to the DCI format 0_0, and has high configurability. The DCI format 0 0 may be referred to as fallback DCI or a fallback UL grant. The DCI format 0_1 may be referred to as non-fallback DCI or a non-fallback UL grant.

It is studied to use the DCI format 0_1 for at least one of activation and deactivation of an SP-CSI reporting on the PUSCH. For example, the DCI format 0_1 may include a CSI request field, and may activate or deactivate an optional configured SP-CSI trigger state. The certain DCI format 0_1 may be used only to activate or deactivate the SP-CSI reporting. For example, the DCI format 0_1 for activating or deactivating the SP-CSI reporting may be subjected to CRC encoding, error correction encoding and resource mapping separately from the DCI format 0_1 or the other DCI formats for scheduling UL data (user data). In this case, when blind-decoding DCI and detecting the DCI format 0_1, the UE performs one of activation or deactivation of the SP-CSI reporting, and transmission of the UL data (user data) according to this DCI format 0_1.

How the UE recognizes whether or not the DCI deactivates the SP-CSI reporting on the PUSCH is not yet clear. Hence, the inventors of the present invention have studied a method for giving notification of deactivation of the SP-CSI reporting, and reached the present invention.

An embodiment according to the present disclosure will be described in detail below with reference to the drawings. A radio communication method according to each embodiment may be each applied alone, or may be applied in combination.

For ease of description, DCI for activating the SP-CSI reporting that uses the PUSCH will be also referred to as "activation DCI", "DCI for activation" or an "activation signaling". Furthermore, DCI for deactivating the SP-CSI reporting that uses the PUSCH will be also referred to as "deactivation DCI", "DCI for activation" or a "deactivation signaling". DCI including a CRC scrambled by an SP-CSI-RNTI (DCI for activating or deactivating the SP-CSI reporting that uses the PUSCH) will be also referred to as "SP-CSI control DCI". In addition, a PUSCH may be read as a PUCCH.

A phrase "activate a configuration" in this description may mean to "activate a reporting based on a configuration". A "DCI format" and "DCI" may be interchangeably read in this description.

### (Radio Communication Method)

### <First Aspect>

An activation signaling (activation DCI) or a deactivation signaling (deactivation DCI) may be identified based on whether a value of at least one field in a DCI format 0_1 satisfies a given condition.

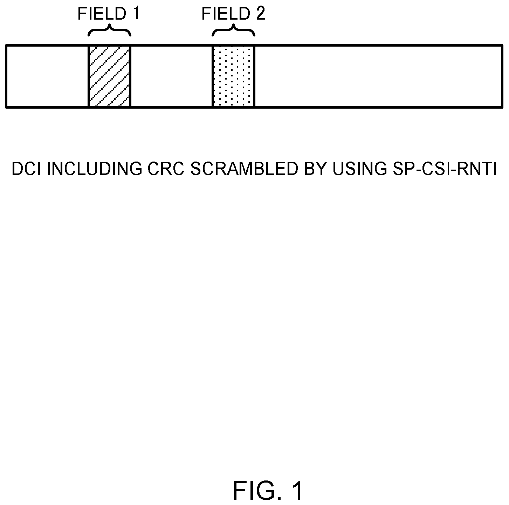

The activation signaling (activation DCI) or the deactivation signaling (deactivation DCI) may be identified based on whether or not values of at least two fields in the DCI format 0_1 satisfy the given condition. Fig. 1 illustrates one example of the DCI format 0_1 including a CRC scrambled by an SP-CSI-RNTI. A field 1 and a field 2 in the DCI format 0_1 may be used to identify whether the DCI activates or deactivates an SP-CSI reporting on a PUSCH.

In addition, a DCI format 0_0 including a CRC scrambled by the SP-CSI-RNTI may be used for at least one of activation DCI and deactivation DCI.

A first field including an optional value, a second field including a fixed value in activation DCI and deactivation DCI and a third field including a fixed value only in the deactivation DCI will be separately described as fields in the DCI foramt 0_1 and the DCI format 0_0.

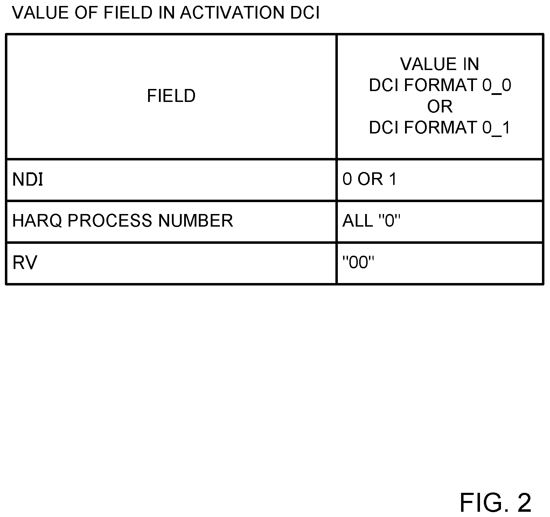

As illustrated in Fig. 2, some first fields may be configured to optional values (valid values) in activation DCI (the DCI format 0_0 or the DCI format 0_1). The first fields may be New Data Indicators (NDIs). The NDIs may be configured to 0 or 1. A UE does not decide whether the detected DCI format 0 0 or DCI format 0_1 is activation DCI based on the first fields.

As illustrated in Fig. 2, some second fields may be configured to fixed values (invalid values) in the activation DCI. The second field may be at least one of, for example, a Hybrid Automatic Repeat reQuest (HARQ) process number and a Redundancy Version (RV).

All of each bit of the HARQ process number field may be configured to "0". The HARQ process number field does not need to be configured to a valid value in the activation DCI. When, for example, the number of HARQ processes configured in a UL carrier is N, the HARQ process number field in the activation DCI may be configured to an optional value that exceeds N. In a case of, for example, N = 8, the HARQ process number field of the activation DCI may be fixed to a value of one of 9 to 15.

An RV field may be configured to "00".

Some third fields may be configured to valid values in the activation DCI. The third field may be at least one of a Modulation and Coding Scheme (MCS), a CSI request, time domain resource allocation and frequency domain resource allocation (resource block allocation).

A time domain resource allocation field may indicate a time resource (e.g., a symbol or a slot) of a PUSCH used for an SP-CSI reporting. For example, the time resource may be expressed by a value (Start and Length Indicator Value: SILV) that indicates a start symbol and a length of a symbol unit, a PUSCH mapping type (A or B) that indicates a DMRS mapping configuration, or K2 (the number of differences between a slot in which the activation DCI has been received and a slot in which the PUSCH is transmitted).

The frequency domain resource allocation field may indicate a frequency resource of a PUSCH used for the SP-CSI reporting.

When a higher layer configures only a Resource Allocation (RA) type 0 for the SP-CSI reporting, the frequency domain resource allocation field of the DCI format 0_1 may be expressed by a bitmap whose unit is a given frequency resource (e.g., Resource Block Group (RBG)).

When the higher layer configures only an RA type 1 for the SP-CSI reporting, the frequency domain resource allocation field of the DCI format 0_1 may be expressed by a Resource Indication Value (RIV) whose unit is a given frequency resource (e.g., PRB) and that indicates a start position and a length of contiguous frequency resources.

The unit of the frequency resource may be one of a PRB, an RBG and a Sub-Carrier Group (SCG).

When the higher layer configures dynamic switch between RA types 0 and 1 for the SP-CSI reporting, Most Significant Bits (MSBs) of the frequency domain resource allocation field in the DCI format 0_1 may indicate the RA type. When the MSBs of the frequency domain resource allocation field are 0 in a state where dynamic switch is configured, the rest of bits of the frequency domain resource allocation field may indicate frequency resources according to the RA type 0. When the MSBs of the frequency domain resource allocation field are 1 in a state where dynamic switch is configured, the rest of bits of the frequency domain resource allocation field may indicate frequency resources according to the RA type 1.

The frequency allocation field of the DCI format 0 0 may indicate a frequency resource similar to the RA type 1 of the DCI format 0_1.

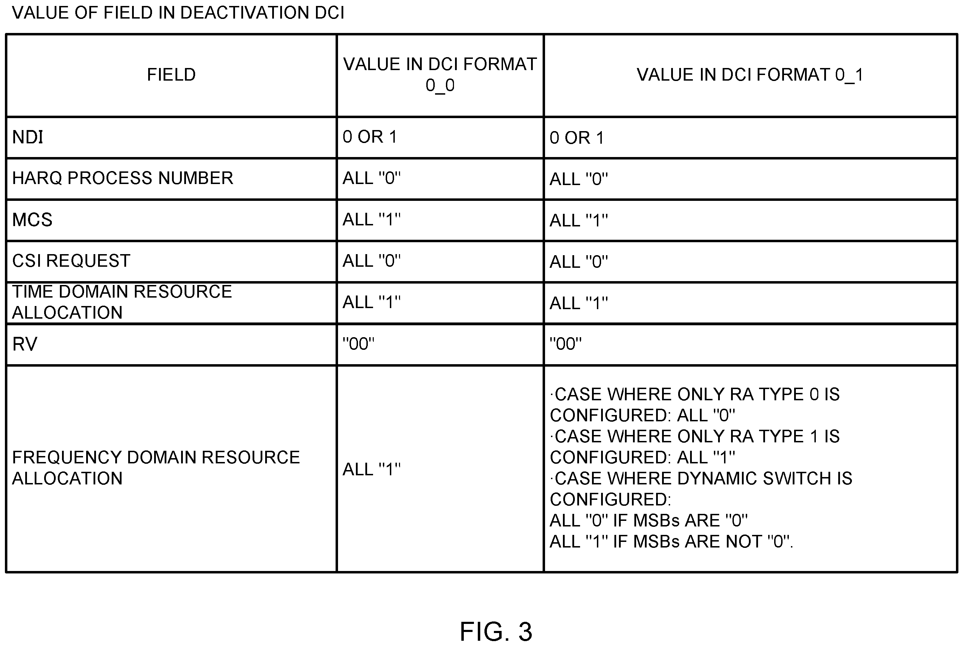

As illustrated in Fig. 3, in deactivation DCI (the DCI format 0_0 or the DCI format 0_1), at least one first field and second field may be configured similar to the activation DCI.

As illustrated in Fig. 3, in the deactivation DCI, at least one third field may be configured to a value (a fixed value or an invalid value) different from that of the activation DCI.

All bits that compose an MCS field may be configured to " 1" in the MCS field.

All bits of a CSI request field may be configured to "0".

All bits of a time domain resource allocation field may be configured to " 1".

A value of the frequency domain resource allocation field may differ between the DCI format 0_0 and the DCI format 0_1 and/or according to the RA type. Furthermore, the frequency domain resource allocation field does not need to be configured to a valid value in the deactivation DCI.

When the higher layer configures only the RA type 0 for the SP-CSI reporting, all bits that compose a frequency domain resource allocation field may be configured to "0" in the frequency domain resource allocation field in the DCI format 0_1. In addition, when only the RA type 0 is configured, all bits of the frequency domain resource allocation field of the DCI format 0_1 for UL data scheduling or activation are not configured to "0".

When the higher layer configures only the RA type 1 for the SP-CSI reporting, all bits of the frequency domain resource allocation field in the DCI format 0_1 may be configured to "1". In addition, when only the RA type 1 is configured, all bits of the frequency domain resource allocation field of the DCI format 0_1 for UL data scheduling or activation are not all configured to "1".

When the higher layer configures dynamic switch for the SP-CSI reporting, and the MSBs of the frequency domain resource allocation field in the DCI format 0_1 are set to 0, all of the rest of bits of the frequency domain resource allocation field may be set to "0". In addition, when the dynamic switch is configured, and the MSBs of the frequency domain resource allocation field in the DCI format 0_1 are set to 0, all bits of the frequency domain resource allocation field of the DCI format 0_1 for UL data scheduling or activation are not set to "0".

When the higher layer configures the dynamic switch for the SP-CSI reporting, and the MSBs of the frequency domain resource allocation field in the DCI format 0_1 are set to 1, all of the rest of bits of the frequency domain resource allocation field may be set to "1". In addition, when the dynamic switch is configured, and the MSBs of the frequency domain resource allocation field in the DCI format 0_1 are set to 1, all bits of the frequency domain resource allocation field of the DCI format 0_1 for UL data scheduling or activation are not set to "1".

In other words, when the higher layer configures the dynamic switch for the SP-CSI reporting, all bits of the frequency domain resource allocation field of the DCI format 0_1 for deactivation may be configured to an identical value (all bits may be configured to "0" or "1"). Furthermore, whether all bits that compose the frequency domain resource allocation field and are other than the MSBs are configured to "0" or "1" may be determined based on whether the MSBs of the frequency domain resource allocation field are 1 or 0.

All bits of the frequency domain resource allocation field in the DCI format 0_0 may be configured to "1". The frequency domain resource allocation field of the DCI format 0_0 for UL data scheduling or activation is similar to the RA type 1 of the DCI format 0_1, and therefore all bits are not configured to " 1".

Thus, based on that a value of a specific field (third field) of the deactivation DCI is different from a value of a specific field of the activation DCI (the value is a given value outside a range of the value of the specific field of the activation DCI), the UE may identify whether the DCI activates or deactivates the SP-CSI reporting on the PUSCH based on a value of at least one specific field in SP-CSI control DCI.

In addition, the DCI format 0_0 may not include at least one field of the DCI format 0_1. For example, the DCI format 0_0 may not include a CSI request field.

DCI (e.g., UL data scheduling DCI) that is not the SP-CSI control DCI may include a CRC that is scrambled by another RNTI (e.g., at least one of a UL data scheduling RNTI and a Cell (C)-RNTI and a Configured Scheduling (CS)-RNTI). The UE may decide whether or not the DCI is the SP-CSI control DCI based on whether or not an RNTI obtained by blind-decoding the DCI is the SP-CSI-RNTI. In other words, when the CRC of received DCI is decoded by using the SP-CSI-RNTI, the UE may decide that the DCI is the SP-CSI control DCI.

When at least one second field in the received DCI has a given value (a fixed value or an invalid value), the UE may decide the DCI as the SP-CSI control DCI.

When the DCI is decided as the SP-CSI control DCI, and the DCI satisfies the given condition, the UE may identify the DCI as deactivation DCI. When this is not the case, the UE may decide the DCI as activation DCI. The given condition may be that at least two of a plurality of specific fields have corresponding given values (fixed values or invalid values). The given condition may be that all of a plurality of specific fields have corresponding given values (fixed values or invalid values). The given condition may be that at least one specific field has a corresponding given value (a fixed value or an invalid value). The given condition may be that the frequency domain resource allocation field has a given value.

The UE may control activation of SP-CSI based on an association of a value of the CSI request field of the activation DCI and an activation target CSI configuration. The association may be defined by a specification, or may be configured by a higher layer signaling (e.g., RRC signaling).

According to the first aspect, the radio base station can notify the UE of whether the SP-CSI control DCI instructs activation or deactivation without increasing a field of a DCI format and a payload size of the DCI format.

### <Second Aspect>

Even when SP-CSI on a PUSCH is activated, a UE may receive activation DCI. In this case, the activation DCI may override (or modify) a configuration of a currently active SP-CSI reporting on the PUSCH.

For example, the activation DCI may include a field associated with a parameter (also referred to simply as a "transmission parameter") related to transmission of the SP-CSI reporting such as parameters related to resource allocation, a DeModulation Reference Signal (DMRS) pattern of the PUSCH and Resource Element (RE) mapping for the SP-CSI reporting that uses the PUSCH.

When, for example, receiving second activation DCI in a state where the SP-CSI reporting that uses a frequency resource indicated by a frequency resource allocation field of first activation DCI is active, the UE may change a frequency resource of an active SP-CSI reporting to a frequency resource indicated by a frequency domain resource allocation field of the second activation DCI.

According to the second aspect, by overriding a configuration of an active SP-CSI reporting by activation DCI for the active SP-CSI reporting, it is possible to change the configuration of the SP-CSI reporting without deactivating the active SP-CSI reporting. Consequently, it is possible to prevent an increase in an overhead of deactivation. Furthermore, it is possible to flexibly configure the SP-CSI reporting.

### <Third Aspect>

For a given UE-specific Search Space (USS) set, a DCI format 0_1 including a CRC scrambled by an SP-CSI-RNTI may have the same payload size as that of a DCI format 0_1 including a CRC scrambled by another RNTI (e.g., at least one of a C-RNTI and a CS-RNTI).

The UE may assume that, for the given UE-specific search space set, a payload size of the DCI format 0_1 including a CRC scrambled by the SP-CSI-RNTI is equal to the payload size of the DCI format 0_1 including a CRC scrambled by another RNTI. The UE blind-decodes DCI (PDCCH) by using the SP-CSI-RNTI and the another RNTI, and decide that the DCI is SP-CSI control DCI when succeeding in decoding the DCI by using the SP-CSI-RNTI.

According to the third aspect, a payload size of the SP-CSI control DCI and a payload size of UL data scheduling DCI are equal, so that the UE can suppress a load of blind-decoding.

### (Radio Communication System)

The configuration of the radio communication system according to one embodiment of the present disclosure will be described below. This radio communication system uses one or a combination of the radio communication method according to each of the above embodiment of the present disclosure to perform communication.

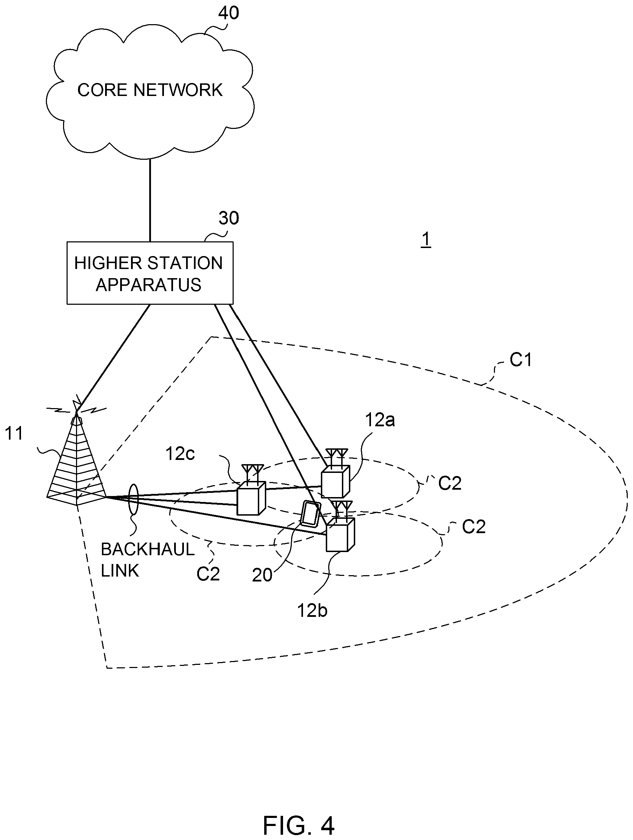

Fig. 4 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 4.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 may apply CA or DC by using a plurality of cells (CCs).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain. For example, a case where subcarrier spacings of constituent OFDM symbols are different and/or a case where the numbers of OFDM symbols are different on a certain physical channel may be read as that numerologies are different.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### (Radio Base Station)

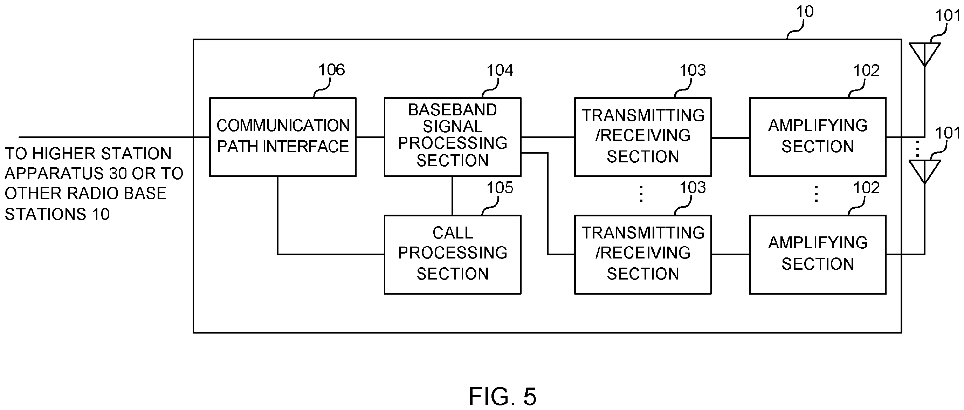

Fig. 5 is a diagram illustrating one example of an overall configuration of the radio base station according to the one embodiment. The radio base station 10 includes pluralities of transmission/reception antennas 101, amplifying sections 102 and transmitting/receiving sections 103, a baseband signal processing section 104, a call processing section 105 and a communication path interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmitting/receiving section or may be composed of transmitting sections and receiving sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the communication path interface 106. The call processing section 105 performs call processing (such as a configuration and release) of a communication channel, state management of the radio base station 10 and radio resource management.

The communication path interface 106 transmits and receives signals to and from the higher station apparatus 30 via a given interface. Furthermore, the communication path interface 106 may transmit and receive (backhaul signaling) signals to and from the another radio base station 10 via an inter-base station interface (e.g., optical fibers compliant with the Common Public Radio Interface (CPRI) or the X2 interface).

Furthermore, each transmitting/receiving section 103 may use a semi-persistently indicated resource to receive channel state information (SP-CSI) transmitted from the user terminal 20 by using a PUCCH and/or a PUSCH.

Furthermore, each transmitting/receiving section 103 may transmit downlink control information for instructing activation or deactivation of a Semi-Persistent Channel State Information reporting (SP-CSI reporting) to the user terminal 20.

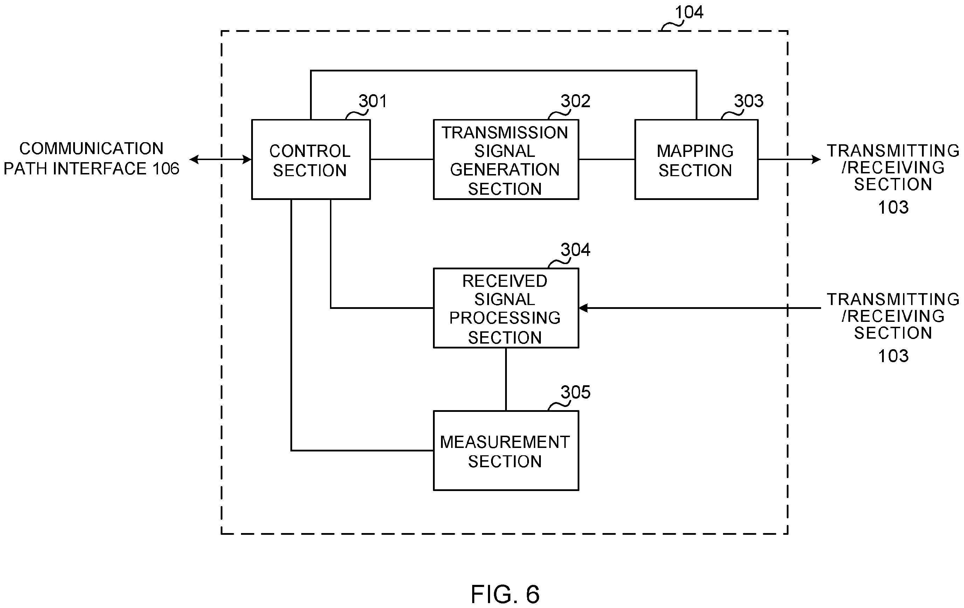

Fig. 6 is a diagram illustrating one example of a function configuration of the radio base station according to the one embodiment. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

The control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

Furthermore, the control section 301 may control reception processing (e.g., decoding) in a duration including a semi-persistently indicated resource (SP-CSI resource). The control section 301 may control generation and transmission of information (e.g., SP-CSI reporting activation DCI) for instructing start of the Semi-Persistent Channel State Information reporting (SP-CSI reporting).

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for giving notification of downlink data allocation information, and/or a UL grant for giving notification of uplink data allocation information based on the instruction from the control section 301. The DL assignment and the UL grant are both DCI, and conform to a DCI format. Furthermore, the transmission signal generating section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### (User Terminal)

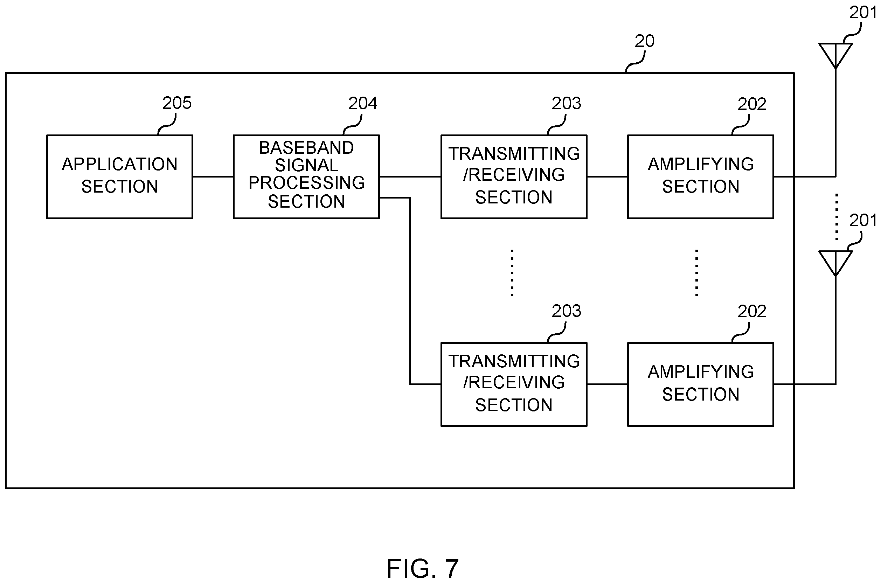

Fig. 7 is a diagram illustrating one example of an overall configuration of the user terminal according to the one embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmitting/receiving section or may be composed of transmitting sections and receiving sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts a baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

Furthermore, each transmitting/receiving section 203 may use a semi-persistently indicated resource to transmit channel state information (SP-CSI) to the radio base station 10 by using the PUCCH and/or the PUSCH.

Furthermore, each transmitting/receiving section 203 may receive downlink control information for instructing activation or deactivation of a Semi-Persistent Channel State Information reporting (SP-CSI reporting) from the radio base station 10.

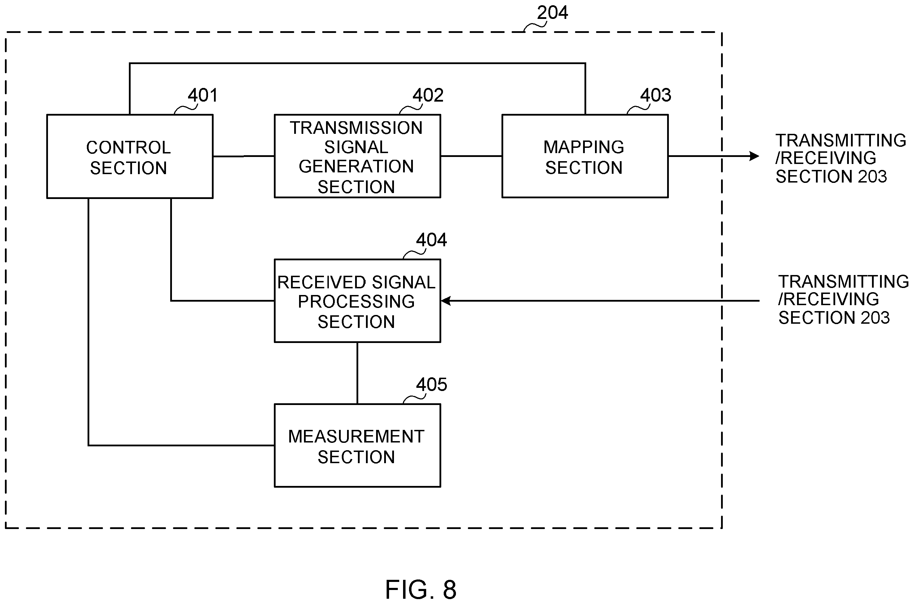

Fig. 8 is a diagram illustrating one example of a function configuration of the user terminal according to the one embodiment. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

Furthermore, the control section 401 may determine whether or not the downlink control information instructs deactivation, based on a value of at least one given field (e.g., a specific field or a third field) including a frequency domain resource allocation field of the downlink control information.

Furthermore, the control section 401 may determine that the downlink control information instructs deactivation, according to that the value of the at least one field is a given value outside a range of the value of the given field of the downlink control information for instructing activation.

Furthermore, the given value for the frequency domain resource allocation field may differ according to a frequency domain resource allocation type.

Furthermore, when additional downlink control information (e.g., second activation DCI) for instructing activation of the reporting in a state where the downlink control information (e.g., first activation DCI) activates the reporting, the control section 401 may change a configuration instructed by the downlink control information to a configuration instructed by the additional downlink control information.

Furthermore, a payload size of the downlink control information that includes a cyclic redundancy check code scrambled by an identifier (e.g., SP-CSI-RNTI) of the user terminal for the reporting and is transmitted in a user-specific search space may be equal to a payload size of another downlink control information that includes a cyclic redundancy check code scrambled by another identifier (e.g., at least one of a C-RNTI and a CS-RNTI) of the user terminal and is transmitted in the user-specific search space.

In addition, in this description, "transmission from the user terminal 20" may be read as, for example, "reception at the radio base station 10".

Furthermore, when obtaining from the received signal processing section 404 various pieces of information notified from the radio base station 10, the control section 401 may update parameters used for control based on the various pieces of information.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the receiving section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

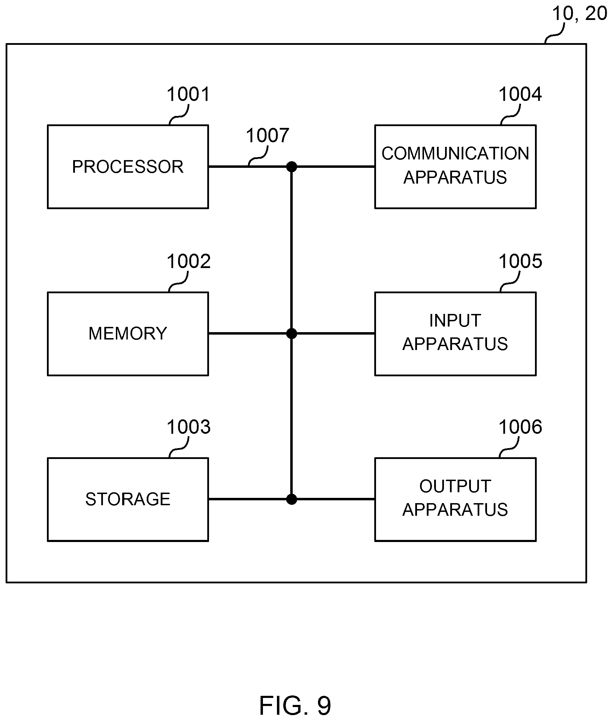

For example, the radio base station and the user terminal according to the one embodiment of the present disclosure may function as computers that perform processing of the radio communication method according to the present disclosure. Fig. 9 is a diagram illustrating one example of the hardware configurations of the radio base station and the user terminal according to the one embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmitting/receiving sections 103 (203) and communication path interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspects/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (LI control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide a communication service in this coverage.

In this description, the terms "Mobile Station (MS)", "user terminal", "user apparatus (UE: User Equipment)" and "terminal" can be interchangeably used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present disclosure may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The invention according to the present disclosure has been described in detail above. However, it is obvious for a person skilled in the art that the invention according to the present disclosure is not limited to the embodiment described in this description. The invention according to the present disclosure can be carried out as modified and changed aspects without departing from the gist and the scope of the invention defined based on the recitation of the claims. Accordingly, the disclosure of this description is intended for exemplary explanation, and does not bring any restrictive meaning to the invention according to the present disclosure.

## Claims

1. A user terminal comprising:
a receiving section that receives downlink control information for instructing activation or deactivation of a semi-persistent channel state information reporting; and
a control section that determines whether or not the downlink control information instructs the deactivation based on a value of at least one given field including a frequency domain resource allocation field of the downlink control information.

2. The user terminal according to claim 1, wherein the control section determines that the downlink control information instructs the deactivation according to that the value of the at least one field is a given value outside a range of the value of the given field of the downlink control information for instructing the activation.

3. The user terminal according to claim 2, wherein the given value for the frequency domain resource allocation field differs according to a frequency domain resource allocation type.

4. The user terminal according to any one of claims 1 to 3, wherein, when the receiving section receives additional downlink control information for instructing activation of the reporting in a state where the downlink control information activates the reporting, the control section changes a configuration instructed by the downlink control information to a configuration instructed by the additional downlink control information.

5. The user terminal according to any one of claims 1 to 4, wherein a payload size of the downlink control information is equal to a payload size of another downlink control information, the downlink control information including a cyclic redundancy check code scrambled by an identifier of the user terminal for the reporting, and transmitted in a user-specific search space, the another downlink control information including a cyclic redundancy check code scrambled by another identifier of the user terminal, and transmitted in the user-specific search space.

6. A radio communication method of a user terminal comprising:
receiving downlink control information for instructing activation or deactivation of a semi-persistent channel state information reporting; and
determining whether or not the downlink control information instructs the deactivation based on a value of at least one field including a frequency domain resource allocation field of the downlink control information.
